# EUROPÄISCHE PATENTSCHRIFT

(11) **EP 2 421 681 B1**
(45) Veröffentlichungstag und Bekanntmachung des Hinweises auf die Patenterteilung: **10.07.2013**
(21) Anmeldenummer: 10721331.6
(22) Anmeldetag: 19.05.2010
(51) Int. Cl.: B25J 15/02, B65G 47/90

(54) **PRODUKTGREIFER**
PRODUCT GRIPPER
ÉLÉMENT DE SAISIE DE PRODUIT

(30) Priorität: 23.06.2009 DE 102009030011
(43) Veröffentlichungstag der Anmeldung: 29.02.2012
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2010/003076
(87) Internationale Veröffentlichungsnummer: WO 2010/149254

(56) Entgegenhaltungen:
- WO-A1-2007/093774
- WO-A2-99/00306
- DE-A1- 19 847 932
- US-A1- 2006 182 603

## Beschreibung

Die Erfindung betrifft einen Produktgreifer zum Aufnehmen eines Produkts, welcher zwei Schaufelblätter und ein Antriebsmittel umfasst, um die Schaufelblätter zwischen einer ersten Position, in welcher die Schaufelblätter auf gegenüberliegenden Seiten des aufzunehmenden Produkts auf eine Auflage für das aufzunehmende Produkt aufsetzbar sind, und einer zweiten Position zu bewegen, in welcher sich die Schaufelblätter zumindest teilweise unter dem aufzunehmenden Produkt befinden.

Derartige Produktgreifer sind grundsätzlich bekannt und kommen beispielsweise in der Lebensmittelindustrie zum Einsatz, um Lebensmittelprodukte von einem ersten Fördermittel auf ein zweites Fördermittel umzusetzen, zu sortieren oder in eine Verpackung einzubringen. Typischerweise sind die Produktgreifer an dem beweglichen Teil eines Roboters montiert.

Bei den aufzunehmenden Produkten kann es sich um einzelne Stücke oder Scheiben von beispielsweise Fleisch, Wurst, Käse und dergleichen, oder um Portionen handeln, die sich aus mehreren solcher Stücke bzw. Scheiben zusammensetzen. Bei einer mehrere Scheiben umfassenden Portion können die einzelnen Scheiben ein- oder mehrfach gefaltet sein und gegebenenfalls zumindest teilweise übereinander liegen. Üblicherweise werden derartige aus mehreren gefalteten Scheiben bestehende Portionen von Hand zusammengeschoben, d.h. bezüglich ihrer Länge verkürzt, damit sie in kürzere Verpackungen eingelegt werden können.

Die WO 2007/093774 A1 offenbart einen Produktgreifer gemäß dem Oberbegriff des Anspruchs 1, bei welchem zum Verkürzen eines aufzunehmenden Produkts zwei linear verschiebbare Platten vorgesehen sind.

In der DE 198 47 932 A1 ist eine Fördereinrichtung für stapelbare Beutelpakete offenbart. Die Fördereinrichtung umfasst einen Greifer, welcher die Beutelpakete mittels zweier Haltewinkel aufnimmt und unter Verwendung von Klemmzylindern in den Haltewinkeln festklemmt. Weiterhin drückt eine Knickleiste von oben auf das Beutelpaket.

Der Erfindung liegt die Aufgabe zugrunde, einen Produktgreifer zu schaffen, welcher das Produkthandling vereinfacht.

Die Erfindung wird durch einen Produktgreifer mit den Merkmalen des Anspruchs 1 gelöst.

Erfindungsgemäß erfüllt der Produktgreifer also eine Doppelfunktion, indem er zusätzlich zu seiner originären Aufgabe des Greifens eines Produkts außerdem die Aufgabe der Verkürzung bzw. des Zusammenschiebens des Produkts übernimmt. Da der erfindungsgemäße Produktgreifer das zu handhabende Produkt, beispielsweise eine Portion aus mehreren gefalteten Scheiben, nicht nur greift, sondern auch komprimiert, braucht das zu handhabende Produkt nicht mehr von Hand zusammengeschoben werden. Stattdessen kann der Produktgreifer das aufgegriffene und gleichzeitig verkürzte Produkt direkt in eine entsprechend vorgesehene Verpackung einlegen. Im Ergebnis lässt sich durch den erfindungsgemäßen Produktgreifer also ein manueller Arbeitsgang einsparen, wodurch das Produkthandling bzw. die Produktverarbeitung insgesamt nicht nur hygienischer, sondern auch einfacher und automatisierter und somit letztlich kostengünstiger wird.

Erfindungsgemäß umfassen die Verkürzungsmittel zwei zueinander beabstandete Klappen, die jeweils zwischen einer ersten, zumindest annähernd horizontalen Lage (Ruhelage) und einer zweiten, im Wesentlichen vertikalen Lage (Aktivlage) um eine Schwenkachse verschwenkbar sind, welche im Wesentlichen rechtwinklig zu der Bewegungsrichtung der Schaufelblätter orientiert ist.

Vorteilhafte Ausbildungen der Erfindung sind den Unteransprüchen, der Beschreibung und der Zeichnung zu entnehmen.

Grundsätzlich ist es denkbar, die Mittel zum Verkürzen des Produkts so auszubilden, dass es das Produkt in mehr als einer Richtung, beispielsweise in zwei zueinander rechtwinkligen Richtungen, zusammenschiebt. Eine besonders einfache bauliche Ausführungsform lässt sich realisieren, wenn die Verkürzungsmittel so ausgebildet sind, dass sie das Produkt lediglich in der Bewegungsrichtung der Schaufelblätter gesehen zusammenschieben.

Gemäß einer bevorzugten Ausführungsform sind die Verkürzungsmittel zwischen den Schaufelblättern angeordnet. Es handelt sich bei den Verkürzungsmitteln also um von den Schaufelblättern separate Bauteile, die abhängig oder unabhängig von der Bewegung der Schaufelblätter betätigt werden können.

Alternativ dazu ist aber auch eine Ausführungsform denkbar, bei welcher ein aufzunehmendes Produkt durch die Schaufelblätter selbst bzw. durch Halter für die Schaufelblätter zusammengeschoben wird. In diesem Fall ist die Verkürzung des Produkts also jedenfalls an die Bewegung der Schaufelblätter gekoppelt.

Um zu verhindern, dass die Verkürzungsmittel beim Aufnehmen eines Produkts mit diesem ungewollt in Eingriff geraten, ist es vorteilhaft, wenn die Verkürzungsmittel zwischen einer Ruhelage, in welcher sie zu einem aufzunehmenden Produkt beabstandet sind, und einer Aktivlage, in welcher sie mit einem aufgenommenen Produkt in Eingriff stehen und dieses verkürzen, verstellbar sind.

Gemäß einer bevorzugten Ausführungsform ist ein Mechanismus vorgesehen, durch welchen die Bewegung der Schaufelblätter aus ihrer ersten Position in ihre zweite Position in eine Verstellung der Verkürzungsmittel aus ihrer Ruhelage in ihre Aktivlage umsetzbar ist. Durch den Mechanismus ist die Verstellung der Verkürzungsmittel also an die Bewegung der Schaufelblätter gekoppelt, so dass kein separater Antrieb für die Verstellung der Verkürzungsmittel vorgesehen zu werden braucht.

Gemäß einer besonders einfachen baulichen Ausführungsform umfasst der Mechanismus mit den Schaufelblättern verbundene Rollen und an den Verkürzungsmitteln ausgebildete Schrägflächen, auf welche die Rollen auflaufen können. Dieser Mechanismus eignet sich insbesondere für die Verstellung von Klappen umfassenden Verkürzungsmitteln.

Vorteilhafterweise sind Arretiermittel zur Arretierung der Verkürzungsmittel in ihrer Ruhelage und/oder ihrer Aktivlage vorgesehen. Die Arretiermittel können beispielsweise Magnete umfassen.

Gemäß einer weiteren Ausführungsform ist ein Stempel zum Niederdrücken eines aufgenommenen Produkts an einem Ablageort vorgesehen.

Beispielsweise kann der Stempel dazu dienen, ein aufgenommenes Produkt in eine Verpackung niederzudrücken.

Bevorzugt ist der Stempel zwischen einer angehobenen Lage, in welcher eine dem aufgenommenen Produkt zugewandte Unterseite des Stempels zu dem Produkt beabstandet ist, und einer abgesenkten Lage bewegbar, in welcher die Stempelunterseite etwa auf der Höhe einer durch die Schaufelblätter definierten Schaufelblattebene oder darunter liegt. Der Hub des Stempels kann mit anderen Worten größer als die maximale Dicke eines aufzunehmenden Produkts sein, so dass sich ein abzulegendes Produkt wirksam in eine unter der Schaufelblattebene angeordnete Verpackung hineindrücken lässt.

Vorteilhafterweise ist der Stempel zwischen den Verkürzungsmitteln angeordnet. Dabei entspricht die Ausdehnung des Stempels in Bewegungsrichtung der Schaufelblätter gesehen bevorzugt im Wesentlichen dem Abstand der Verkürzungsmittel in ihrer Aktivlage. Die Verkürzungsmittel bilden mit anderen Worten einen Kanal, in dem das komprimierte Produkt liegt und über dessen im Wesentlichen gesamte Breite der Stempel auf das komprimierte Produkt wirkt, wodurch ein abzulegendes Produkt kontrolliert und mit einer gleichmäßigen Druckverteilung in eine Verpackung hineingedrückt werden kann.

Wie bereits erwähnt, können Arretiermittel zur Arretierung der Verkürzungsmittel in ihrer Aktivlage vorgesehen sein. Durch die in ihrer Aktivlage arretierten Verkürzungsmittel ist sichergestellt, dass ein aufgenommenes Produkt bei seiner Freigabe seine verkürzte Gesamtlänge beibehält.

Um die Verkürzungsmittel aus ihrer Aktivlage lösen zu können, umfasst der Produktgreifer vorzugsweise einen entsprechenden Lösemechanismus. Der Lösemechanismus kann an dem Stempel und an den Verkürzungsmitteln vorgesehene Magnete umfassen, die so angeordnet und gepolt sind, dass sich die Magnete des Stempels und die Magnete der Verkürzungsmittel abstoßen, wenn der Stempel seine abgesenkte Lage erreicht. Die Lösung der Verkürzungsmittel aus ihrer Aktivlage erfolgt auf diese Weise selbsttätig beim Ablegen eines aufgenommenen Produkts, insbesondere dann, wenn das abzulegende Produkt vollständig in seine Verpackung hineingedrückt ist.

Während die Verkürzungsmittel gemäß einer vorteilhaften Ausführungsform durch das Zusammenfahren der Schaufelblätter aus ihrer Ruhelage in ihre Aktivlage gebracht werden, ist der umgekehrte Vorgang, d.h. die Verstellung der Verkürzungsmittel aus ihrer Aktivlage in ihre Ruhelage also von der Bewegung der Schaufelblätter unabhängig und stattdessen an das Erreichen der abgesenkten Lage durch den Stempel gekoppelt.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine perspektivische Ansicht eines erfindungsgemäßen Produktgreifers mit offenem Schaufeln von oben;
- Fig. 2: eine Seitenansicht des Produktgreifers von Fig. 1;
- Fig. 3: eine Seitenansicht des Produktgreifers von Fig. 1 mit halb geschlossenen Schaufeln;
- Fig. 4: eine Seitenansicht des Produktgreifers von Fig. 1 mit vollständig geschlossenen Schaufeln;
- Fig. 5: eine Seitenansicht des Produktgreifers von Fig. 1 mit offenen Schaufeln und heruntergeklappten Verkürzungsmitteln; und
- Fig. 6: eine Seitenansicht des Produktgreifers von Fig. 1 mit offenen Schaufeln und abgesenktem Stempel.

Der in den Figuren dargestellte Produktgreifer besitzt eine Rahmenstruktur 10, welche zwei zueinander beabstandete und sich im Wesentlichen parallel zueinander erstreckende Seitenbleche 12 umfasst, die im Bereich ihrer äußeren Enden durch zwei Querleisten 14 und in einem mittleren oberen Bereich durch einen Quersteg 16 miteinander verbunden sind. An dem Quersteg 16 ist ein Adapter 17 angebracht, welcher die Montage des Produktgreifers an einem Roboterarm ermöglicht.

An den Querleisten 14 sind zwei Führungsstangen 18 befestigt, die sich zueinander beabstandet parallel zu den Seitenblechen 12 erstrecken. Die Führungsstangen 18 dienen zur Führung zweier Schaufeln 20.

Jede Schaufel 20 umfasst ein Schaufelblatt 22, welches mittels eines Schaufelblatthalters 24 verschiebbar an den Führungsstangen 18 gelagert ist.

Zur Verschiebung der Schaufeln 20 entlang den Führungsstangen 18 ist jeder Schaufel 20 ein, beispielsweise pneumatisch oder hydraulisch betätigbarer, Betätigungszylinder 26 zugeordnet, welcher oberhalb der Führungsstangen 18 angeordnet ist und einen parallel zu den Führungsstangen 18 bewegbaren Kolben 28 besitzt, der im Bereich seines freien Endes mit dem zugeordneten Schaufelblatthalter 24 verbunden ist. Die Betätigungszylinder 26 werden von der Rahmenstruktur 10 getragen.

Es versteht sich, dass grundsätzlich auch nur ein Betätigungszylinder oder ein elektrischer Antrieb zur Verschiebung der Schaufeln 20 vorgesehen sein kann.

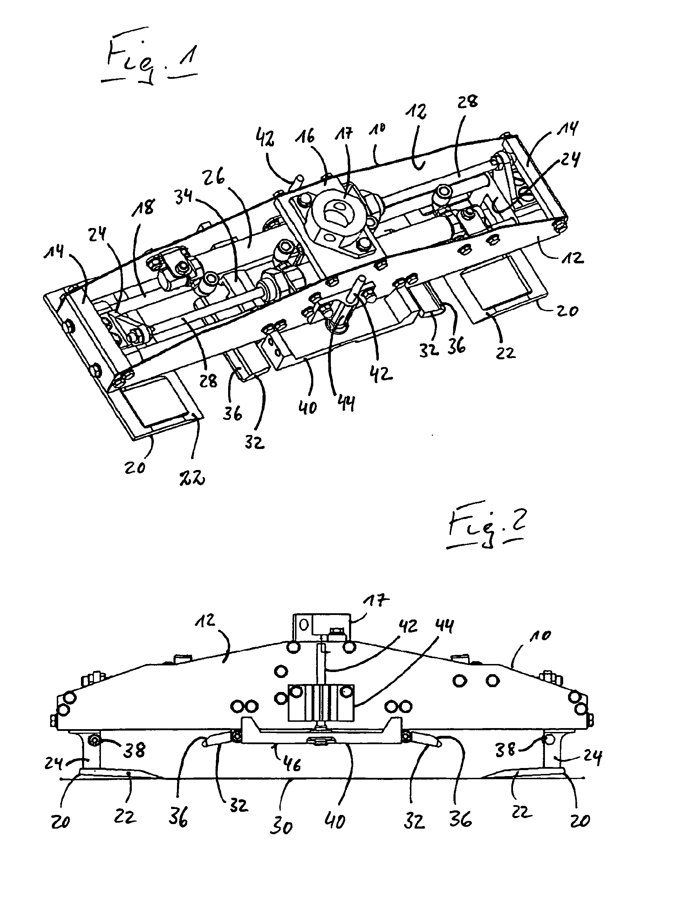

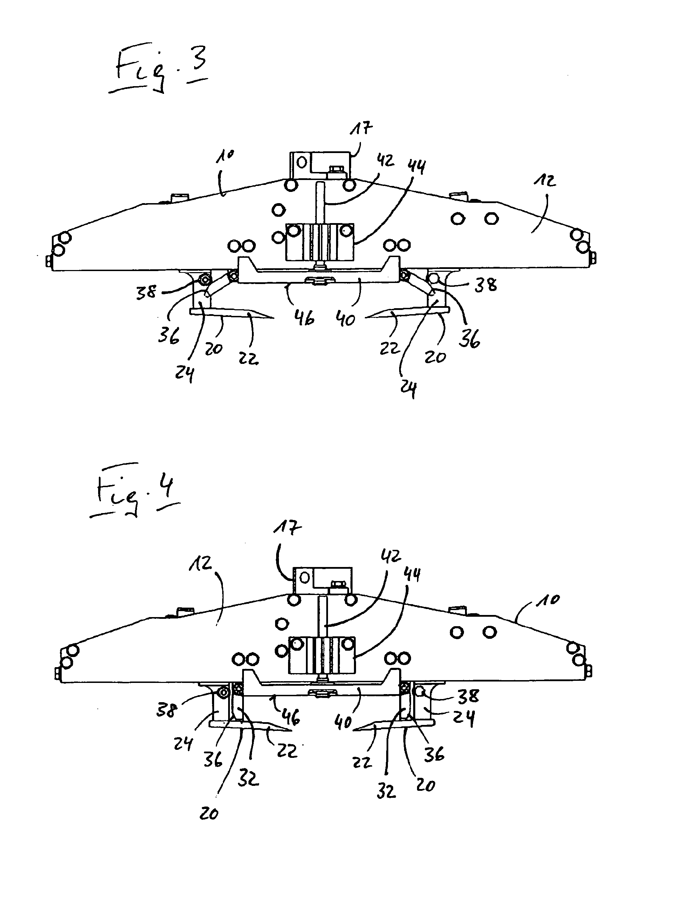

Mit Hilfe der Betätigungszylinder 26 lassen sich die Schaufeln 20 zwischen einer ersten Position, in welcher die Schaufelblätter 22 einen maximalen Abstand zueinander aufweisen und auf gegenüberliegenden Seiten eines aufzunehmenden Produkts, beispielsweise einer Portion von gefalteten Wurst-, Schinken- oder Käsescheiben, auf eine Auflage 30 für das aufzunehmende Produkt aufsetzbar sind (Fig. 2) und einer zweiten Position bewegen, in welcher die Schaufeln 20 einen minimalen Abstand zueinander aufweisen und sich die Schaufelblätter 22 zumindest teilweise unter dem aufzunehmenden Produkt befinden (Fig. 4).

Um die Länge eines aufzunehmenden Produkts in Bewegungsrichtung der Schaufeln 20 gesehen zu verkürzen, d.h. das aufzunehmende Produkt in besagter Richtung zu komprimieren, sind zwei zwischen den Schaufeln 20 angeordnete Klappen 32 an der Rahmenstruktur 10, genauer gesagt an jeweiligen sich zwischen den Seitenblechen 12 erstreckenden und an diesen befestigten Querträgern 34, verschwenkbar gelagert, wobei sich die entsprechenden Schwenkachsen rechtwinklig zu den Führungsstangen 18 und somit zu der Bewegungsrichtung der Schaufeln 20 erstrecken.

Die Klappen sind jeweils zwischen einer ersten, zumindest annähernd horizontalen Lage (Fig. 2) und einer zweiten, im Wesentlichen vertikalen Lage (Fig. 4) verschwenkbar. Zur Arretierung der Klappen 32 in ihrer ersten und zweiten Lage sind Magnete in die Klappen 32 eingelassen, die mit entsprechend in die Querträger 34 eingelassenen Magneten anziehend zusammenwirken.

Im Bereich ihrer freien Enden weisen die Klappen 32 schaufelseitige Schrägflächen 36 auf. An den Schaufelblatthaltern 24 sind quer zur Bewegungsrichtung der Schaufeln 20 orientierte Rollen 38 derart angeordnet, dass die Rollen 38 beim Zusammenfahren der Schaufeln 20 auf die Schrägflächen 36 der in ihrer ersten Lage befindlichen Klappen 32 auflaufen (Fig. 3) und die Klappen 32 hierdurch in ihre zweite Lage bringen (Fig. 4).

Die Länge der Klappen 32 ist so gewählt, dass die freien Enden der Klappen 32 in der zweiten Lage der Klappen 32 zumindest annähernd bis an die Schaufelblätter 22 heranreichen. Die Klappen 32 geraten bei ihrer Verschwenkung in die zweite Lage folglich mit dem aufzunehmenden Produkt in Eingriff und schieben dieses zusammen, wodurch die Länge des Produkts in Bewegungsrichtung der Schaufeln 20 gesehen verkürzt wird. Die Breite der Klappen 32, d.h. ihre Abmessung quer zur Bewegungsrichtung der Schaufeln 20 gesehen, entspricht zumindest annähernd der Breite der Schaufelblätter 22.

Zwischen den Klappen 32 ist ein Stempel 40 angeordnet, der sich bei in ihrer zweiten Lage befindlichen Klappen 32 im Wesentlichen über den gesamten Abstand zwischen den Klappen 32 erstreckt. Die Breite des Stempels 40 entspricht ebenfalls zumindest annähernd der Breite der Schaufelblätter 22.

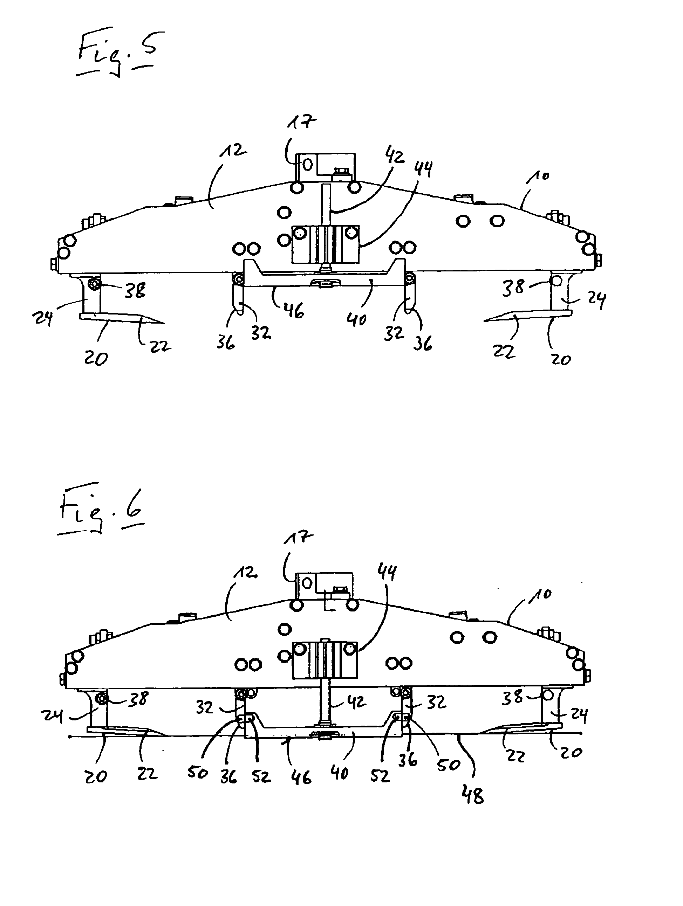

Mittels eines in den Figuren nicht dargestellten, beispielsweise pneumatisch oder hydraulisch betätigbaren, Zylinders lässt sich der Stempel 40 zwischen einer angehobenen Lage (Fig. 1 bis 5) und einer abgesenkten Lage (Fig. 6) bewegen. Dabei ist der Stempel 40 mit Hilfe von an diesem angebrachten und sich im Wesentlichen rechtwinklig zu den Führungsstangen 18 erstreckenden Führungsstäben 42, die sich durch an den Außenseiten der Seitenbleche 12 angebrachte Führungselemente 44 hindurch erstrecken, geführt.

Der Hub des Stempels 40 ist so gewählt, dass eine den Schaufelblättern 22 zugewandte Unterseite 46 des Stempels 40 im angehobenen Zustand des Stempels 40 zu der Oberseite eines aufgenommenen Produkts beabstandet ist, während die Stempelunterseite 46 im abgesenkten Zustand des Stempels 40 etwas tiefer als eine durch die Schaufelblätter 22 definierte Schaufelblattebene 48 liegt.

Wie in Fig. 6 dargestellt ist, sind im Bereich der freien Enden der Klappen 32 stempelseitig Magnete 50 eingelassen. In den Stempel 40 sind klappenseitig ebenfalls Magnete 52 eingelassen, welche die gleiche Polung wie die Magnete 50 der Klappen 32 besitzen und derart angeordnet sind, dass sie bei vollständig abgesenktem Stempel 40 in den Bereich der Magnete 50 der Klappen 32 gelangen. Durch ihre gleiche Polung stoßen sich die Magnete 52 des Stempels 40 und die Magnete 50 der Klappen 32 ab, wodurch die Klappen 32 aus ihrer zweiten Lage gelöst und - gegebenenfalls durch Federkraft unterstützt - wieder in ihre erste Lage zurückklappen.

Nachfolgend wird die Funktionsweise des Produktgreifers erläutert:

Ausgehend von dem offenen Zustand des Produktgreifers, in welchem die Schaufeln 20 sich in ihrer ersten Position befinden, d.h. also einen maximalen Abstand zueinander aufweisen, wird der Produktgreifer auf ein aufzunehmendes Produkt abgesenkt, bis die Schaufelblätter 22 auf gegenüberliegenden Seiten des Produkts auf der Produktauflage 30 aufsetzen (Fig. 2).

Durch eine entsprechende Betätigung der Betätigungszylinder 26 werden die Schaufelblätter 22 nun aufeinander zu bewegt und unter das aufzunehmende Produkt geschoben. Hierbei laufen die Rollen 38 der Schaufeln 20 auf die Schrägflächen 36 der Klappen 32 auf, wodurch die Klappen 32 heruntergeklappt, d.h. in ihre vertikale zweite Lage verschwenkt werden, und dabei das aufzunehmende Produkt in der Bewegungsrichtung der Schaufeln 20 zusammenschieben, d.h. also dessen Länge verkürzen (Fig. 3 und 4).

In diesem Zustand des Produktgreifers wird das aufgenommene Produkt von seinem Aufnahmeort zu einem Ablageort transportiert. Dabei wird das aufgenommene Produkt durch die vertikal gestellten Klappen 32 fixiert, so dass es nicht von den Schaufelblättern 22 rutschen kann.

An dem Ablageort wird der Produktgreifer abgesenkt, und die Schaufeln 20 werden durch die Betätigungszylinder 26 wieder auseinander gefahren, d.h. geöffnet (Fig. 5). Während des Auseinanderfahrens der Schaufeln 20 bleiben die Klappen 32 vertikal gestellt, damit das Produkt bei seiner Freigabe seine verkürzte Gesamtlänge beibehält.

Abschließend wird der Stempel 40 heruntergefahren, um das Produkt in eine Verpackung hineinzudrücken (Fig. 6). Sobald der Stempel 40 seine tiefste Stellung erreicht, werden die Klappen 32 durch die sich abstoßenden Magnete 50, 52 aus ihrer Vertikalstellung gelöst, und die Klappen 32 schwenken wieder in ihre Horizontalstellung zurück. Der Produktgreifer befindet sich nun wieder in seinem Ausgangszustand und ist bereit für die Aufnahme eines neuen Produkts.

**Bezugszeichenliste**

| | |
|---|---|
| 10 | Rahmenstruktur |
| 12 | Seitenblech |
| 14 | Querleiste |
| 16 | Quersteg |
| 17 | Adapter |
| 18 | Führungsstange |
| 20 | Schaufel |
| 22 | Schaufelblatt |
| 24 | Schaufelblatthalter |
| 26 | Betätigungszylinder |
| 28 | Kolben |
| 30 | Auflage |
| 32 | Klappe |
| 34 | Querträger |
| 36 | Schrägfläche |
| 38 | Rolle |
| 40 | Stempel |
| 42 | Führungsstab |
| 44 | Führungselement |
| 46 | Unterseite |
| 48 | Schaufelblattebene |
| 50 | Magnet |
| 52 | Magnet |

## Patentansprüche

1. Produktgreifer zum Aufnehmen eines Produkts, umfassend zwei Schaufelblätter (22),
ein Antriebsmittel (26), um die Schaufelblätter (22) zwischen einer ersten Position, in welcher die Schaufelblätter (22) auf gegenüberliegenden Seiten des aufzunehmenden Produkts auf eine Auflage für das aufzunehmende Produkt aufsetzbar sind, und einer zweiten Position zu bewegen, in welcher sich die Schaufelblätter (22) zumindest teilweise unter dem aufzunehmenden Produkt befinden, und
Mittel (32) zum Verkürzen des Produkts in wenigstens einer Richtung,
**dadurch gekennzeichnet, dass**
die Verkürzungsmittel zwei zueinander beabstandete Klappen (32) umfassen, die jeweils zwischen einer ersten, zumindest annähernd horizontalen Lage und einer zweiten, im Wesentlichen vertikalen Lage um eine Schwenkachse verschwenkbar sind, welche im Wesentlichen rechtwinklig zu der Bewegungsrichtung der Schaufelblätter (22) orientiert ist.

2. Produktgreifer nach Anspruch 1,
**dadurch gekennzeichnet, dass**
die Verkürzungsmittel (32) so ausgebildet sind, dass sie das Produkt in der Bewegungsrichtung der Schaufelblätter (22) gesehen verkürzen.

3. Produktgreifer nach Anspruch 1 oder 2,
**dadurch gekennzeichnet, dass**
die Verkürzungsmittel (32) zwischen den Schaufelblättern (22) angeordnet sind.

4. Produktgreifer nach einem der vorhergehenden Ansprüche,
**dadurch gekennzeichnet, dass**
die Verkürzungsmittel (32) zwischen einer Ruhelage, in welcher sie mit einem aufzunehmenden Produkt außer Eingriff stehen, und einer Aktivlage, in welcher sie mit einem aufgenommenen Produkt in Eingriff stehen und dieses verkürzen, verstellbar sind.

5. Produktgreifer nach einem der vorhergehenden Ansprüche,
**dadurch gekennzeichnet, dass**
ein Mechanismus (36, 38) vorgesehen ist, durch welchen die Bewegung der Schaufelblätter (22) aus ihrer ersten Position in ihre zweite Position in eine Verstellung der Verkürzungsmittel (32) aus ihrer Ruhelage in ihre Aktivlage umsetzbar ist.

6. Produktgreifer nach Anspruch 5,
**dadurch gekennzeichnet, dass**
der Mechanismus mit den Schaufelblättern (22) verbundene Rollen (38) und an den Verkürzungsmitteln (32) ausgebildete Schrägflächen (36) umfasst, auf welche die Rollen (38) auflaufen können.

7. Produktgreifer nach einem der Ansprüche 4 bis 6,
**dadurch gekennzeichnet, dass**
Arretiermittel zur Arretierung der Verkürzungsmittel (32) in ihrer Ruhelage und/oder ihrer Aktivlage vorgesehen sind.

8. Produktgreifer nach Anspruch 7,
**dadurch gekennzeichnet, dass**
die Arretiermittel Magnete umfassen.

9. Produktgreifer nach Anspruch 7 oder 8,
**gekennzeichnet durch**
einen Lösemechanismus zur Lösung der Arretierung der Verkürzungsmittel (32) in ihrer Aktivlage.

10. Produktgreifer nach einem der vorhergehenden Ansprüche,
**gekennzeichnet durch**
einen Stempel (40) zum Niederdrücken eines aufgenommenen Produkts an einem Ablageort.

11. Produktgreifer nach Anspruch 10,
**dadurch gekennzeichnet, dass**
der Stempel (40) zwischen einer angehobenen Lage, in welcher eine dem aufgenommenen Produkt zugewandte Unterseite (46) des Stempels (40) zu dem Produkt beabstandet ist, und einer abgesenkten Lage bewegbar ist, in welcher die Stempelunterseite (46) etwa auf der Höhe einer durch die Schaufelblätter (22) definierten Schaufelblattebene oder darunter liegt.

12. Produktgreifer nach Anspruch 10 oder 11,
**dadurch gekennzeichnet, dass**
der Stempel (40) zwischen den Verkürzungsmitteln (32) angeordnet ist, wobei bevorzugt die Ausdehnung des Stempels (40) in Bewegungsrichtung der Schaufelblätter (22) gesehen im Wesentlichen dem Abstand der Verkürzungsmittel (32) in ihrer Aktivlage entspricht.

13. Produktgreifer nach Anspruch 9 und einem der Ansprüche 10 bis 12,
**dadurch gekennzeichnet, dass**
der Lösemechanismus an den Verkürzungsmitteln (32) und an dem Stempel (40) vorgesehene Magnete (50, 52) umfasst, die so angeordnet und gepolt sind, dass sich die Magnete (50) der Verkürzungsmittel (32) und die Magnete (52) des Stempels (40) abstoßen, wenn der Stempel (40) seine abgesenkte Lage erreicht.

## Claims

1. A product gripper for picking up a product, comprising two spade blades (22) and
a drive means (26) to move the spade blades (22) between a first position, in which the spade blades (22) can be placed onto a support for the product to be picked up at oppositely disposed sides of the product to be picked up, and a second position in which the spade blades (22) are located at least partly beneath the product to be picked up; and
means (32) for shortening the product in at least one direction,
**characterized in that**
the shortening means include two mutually spaced apart flaps (32) which are each pivotable about a pivot axis between a first, at least approximately horizontal position and a second, substantially vertical position, said pivot axis being substantially orientated at a right angle to the direction of movement of the spade blades (22).

2. A product gripper in accordance with claim 1,
**characterized in that**
the shortening means (32) are formed so that they shorten the product viewed in the direction of movement of the spade blades (22).

3. A product gripper in accordance with claim 1 or claim 2,
**characterized in that**
the shortening means (32) are arranged between the spade blades (22).

4. A product gripper in accordance with any one of the preceding claims,
**characterized in that**
the shortening means (32) are adjustable between a position of rest in which they are out of engagement with a product to be picked up and an active position in which they are in engagement with a picked-up product and shorten it.

5. A product gripper in accordance with any one of the preceding claims,
**characterized in that**
a mechanism (36, 38) is provided by which the movement of the spade blades (22) from their first position into their second position can be converted into an adjustment of the shortening means (32) from their position of rest into their active position.

6. A product gripper in accordance with claim 5,
**characterized in that**
the mechanism includes rollers (38) connected to the spade blades (22) and sloped surfaces (36) which are formed at the shortening means (32) and onto which the rollers (38) can run.

7. A product gripper in accordance with any one of the claims 4 to 6,
**characterized in that**
locking means are provided for locking the shortening means (32) in their position of rest and/or in their active position.

8. A product gripper in accordance with claim 7,
**characterized in that**
the locking means include magnets.

9. A product gripper in accordance with claim 7 or claim 8,
**characterized by**
a release mechanism for releasing the locking of the shortening means (32) in their active position.

10. A product gripper in accordance with any one of the preceding claims,
**characterized by**
a stamp (40) for pressing down a picked-up product at a placement location.

11. A product gripper in accordance with claim 10,
**characterized in that**
the stamp (40) is movable between a raised position in which a lower side (46) of the stamp (40) facing the picked-up product is spaced apart from the product and a lowered position in which the lower side (46) of the stamp lies approximately at the level of a spade blade plane defined by the spade blades (22) or beneath said plane.

12. A product gripper in accordance with claim 10 or claim 11,
**characterized in that**
the stamp (40) is arranged between the shortening means (32), with the extent of the stamp (40) viewed in the direction of movement of the spade blades (22) preferably substantially corresponding to the spacing of the shortening means (32) in their active position.

13. A product gripper in accordance with claim 9 and any one of the claims 10 to 12,
**characterized in that**
the release mechanism includes magnets (50, 52) which are provided at the shortening means (32) and at the stamp (40) and which are arranged and poled so that the magnets (50) of the shortening means (32) and the magnets (52) of the stamp (40) repel one another when the stamp (40) reaches its lowered position.

## Revendications

1. Dispositif de saisie de produit pour prendre un produit, comprenant deux palettes (22),
un moyen d'entraînement (26) pour déplacer les palettes (22) entre une première position dans laquelle les palettes (22) peuvent être posées sur des côtés opposés du produit à prendre sur un support pour le produit à prendre, et une seconde position dans laquelle les palettes (22) se retrouvent au moins partiellement au-dessous du produit à prendre, et des moyens (32) pour raccourcir le produit au moins dans une direction,
**caractérisé en ce que**
les moyens de raccourcissement comprennent deux volets (32) écartés l'un de l'autre, qui sont respectivement capables de pivoter autour d'un axe de pivotement entre une première position au moins approximativement horizontale et une seconde position essentiellement verticale, autour d'un axe qui est orienté essentiellement à angle droit par rapport à la direction de déplacement des palettes (22)

2. Dispositif de saisie de produit selon la revendication 1,
**caractérisé en ce que** les moyens de raccourcissement (32) sont réalisés de telle façon qu'ils raccourcissent le produit, vu dans la direction de déplacement des palettes (22).

3. Dispositif de saisie de produit selon la revendication 1 ou 2, **caractérisé en ce que** les moyens de raccourcissement (32) sont agencés entre les palettes (22).

4. Dispositif de saisie de produit selon l'une des revendications précédentes,
**caractérisé en ce que** les moyens de raccourcissement (32) peuvent être déplacés entre une position de repos dans laquelle ils sont hors d'engagement avec un produit à saisir, et une position active dans laquelle ils sont en engagement avec un produit à saisir et raccourcissent celui-ci.

5. Dispositif de saisie de produit selon l'une des revendications précédentes,
**caractérisé en ce qu'**il est prévu un mécanisme (36, 38) au moyen duquel le mouvement des palettes (22) hors de leur première position vers leur seconde position peut être converti en un déplacement des moyens de raccourcissement (32) hors de leur position de repos vers leur position active.

6. Dispositif de saisie de produit selon la revendication 5,
**caractérisé en ce que** le mécanisme inclut des galets (38) reliés avec les palettes (22) et des surfaces obliques (36) réalisées sur les moyens de raccourcissement (32), sur lesquelles les galets (38) sont capables de rouler.

7. Dispositif de saisie de produit selon l'une des revendications 4 à 6,
**caractérisé en ce qu'**il est prévu des moyens d'arrêt pour arrêter les moyens de raccourcissement (32) dans leur position de repos et/ou leur position active.

8. Dispositif de saisie de produit selon la revendication 7,
**caractérisé en ce que** les moyens d'arrêt incluent des aimants.

9. Dispositif de saisie de produit selon la revendication 7 ou 8,
**caractérisé par** un mécanisme de libération pour libérer l'arrêt des moyens de raccourcissement (32) dans leur position active.

10. Dispositif de saisie de produit selon l'une des revendications précédentes,
**caractérisé par** un poussoir (40) pour presser un produit saisi vers le bas sur un emplacement de dépose.

11. Dispositif de saisie de produit selon la revendication 10,
**caractérisé en ce que** le poussoir (40) est déplaçable entre une position soulevée, dans laquelle une face inférieure (46), tournée vers le produit saisi, du poussoir (40) est écartée du produit, et une position abaissée dans laquelle la face inférieure (46) du poussoir est approximativement à la hauteur d'un plan défini par les palettes (22), ou au-dessous de cette hauteur.

12. Dispositif de saisie de produit selon la revendication 10 ou 11,
**caractérisé en ce que** le poussoir (40) est agencé entre les moyens de raccourcissement (32) et de préférence l'extension du poussoir (40), vu en direction de déplacement des palettes (22), correspond essentiellement à la distance des moyens de raccourcissement (32) dans leur position active.

13. Dispositif de saisie de produit selon la revendication 9 et l'une des revendications 10 à 12,
**caractérisé en ce que** le mécanisme de libération comprend des aimants (50, 52) prévus sur les moyens de raccourcissement (32) et sur le poussoir (40), lesquels sont agencés de telle manière et avec des pôles orientés de telle façon que les aimants (50) des moyens de raccourcissement (32) et les aimants (52) du poussoir (40) se repoussent quand le poussoir (40) atteint sa position abaissée.
